# EUROPEAN PATENT APPLICATION

(11) **EP 2 372 271 A1**
(43) Date of publication of application: **05.10.2011**
(21) Application number: 09833167.1
(22) Date of filing: 11.12.2009
(51) Int. Cl.: F24J 3/08, F24F 3/00, F28D 21/00

(54) **IN-GROUND HEAT EXCHANGER AND AIR CONDITIONING SYSTEM EQUIPPED WITH SAME**

(30) Priority: 19.12.2008 JP 2008323384
(71) Applicant: Daikin Industries, Ltd., Osaka-shi, Osaka 530-8323 (JP)
(72) Inventor: ASAI, Hideaki, Sakai-shi Osaka 591-8511 (JP); KAWABATA, Katsuhiro, Sakai-shi Osaka 591-8511 (JP); TANIMOTO, Keisuke, Sakai-shi Osaka 591-8511 (JP)
(74) Representative: HOFFMANN EITLE
(86) International application number: PCT/JP2009/006815
(87) International publication number: WO 2010/070858

(57) **Abstract**

A heat-transfer pipe (12) is formed so as to extend from a top portion of an outer pipe (11) and to be bent at a bottom portion of the outer pipe (11) to return to the top portion, and is arranged such that at least a portion thereof contacts an inner circumferential surface of the outer pipe (11). The heat-transfer pipe (12) is configured to allow fluid to be heat-exchanged to flow thereinside in opposite directions in heating operation and cooling operation.

## Description

### TECHNICAL FIELD

The present invention relates to an underground heat exchanger for exchanging heat between fluid to be heat-exchanged and soil in the ground.

### BACKGROUND ART

Conventional underground heat exchangers for exchanging heat between fluid to be heat-exchanged and soil in the ground have been know. Such underground heat exchangers are configured to perform heat exchange between the fluid to be heat-exchanged and the soil through a heat medium undergoing a phase change.

Specifically, for example, as disclosed in Patent Document 1, a pipe containing a heat medium is buried under the ground, and a heat exchanger in which fluid to be heat-exchanged flows is provided such that heat exchange is performed with the heat medium evaporated by geothermal heat, the heat medium being inside the pipe. This allows the heat of the heat medium evaporated in the pipe buried under the ground to be transferred to the heat-exchange fluid by the heat exchanger, and to be used as a heat source for heating in a circuit in which the fluid to be heat-exchanged flows.

### CITATION LIST

### PATENT DOCUMENT

PATENT DOCUMENT 1: International Publication No. WO2004/111559

### SUMMARY OF THE INVENTION

### TECHNICAL PROBLEM

In addition to the geothermal heat used as the heat source for heating as described above, there is a case where a configuration for cooling operation which dissipates heat to soil in the ground is required as an air conditioning system using the underground heat exchanger.

In the above configuration for heat exchange between the fluid to be heat-exchanged and the soil in the ground through the heat medium undergoing the phase change, the heat medium is evaporated and condensed repeatedly in the heat exchanger which functions as an evaporator and a condenser during heating operation and cooling operation, respectively. That it, during heating operation, the heat medium of the heat exchanger repeats a cycle of condensation by contacting a heat-transfer pipe in which the fluid to be heat-exchanged flows and evaporation by the geothermal heat. During cooling operation, on the other hand, the heat medium of the heat exchanger repeats a cycle of condensation by the geothermal heat and evaporation by contacting the heat-transfer pipe in which the fluid to be heat-exchanged flows.

Accordingly, when the heat exchanger buried under the ground is used for heating operation and cooling operation, a heat-transfer pipe for heating operation and a heat-transfer pipe for cooling operation are configured to be each provided inside an outer pipe buried under the ground so as to switch the heat-transfer pipes according to the operation states, each of the heat-transfer pipes having the fluid to be heat-exchanged flowing therein. Also, the heat-transfer pipe for heating operation and the heat-transfer pipe for cooling operation are configured to be respectively arranged on an upper side and a lower side inside the outer pipe. During heating operation, such configurations allow the heat medium to be condensed on a surface of the heat-transfer pipe, then to be evaporated by the geothermal heat while moving downward, and to return upward again. During cooling operation, on the other hand, the heat medium is evaporated on the surface of the heat-transfer pipe, is then condensed while moving upward, and returns downward again. Thus, the heat medium efficiently circulates inside the outer pipe.

However, in the heat exchanger configured to include the heat-transfer pipes for the respective heating and cooling operations as described above, heat exchange is not efficiently performed due to limitation of a range in which heat exchange capability is ensured. Consequently, when heating capability and cooling capability are to be ensured, each of the heat-transfer pipes needs to have a certain length, causing an increase in an entire length of the heat exchanger. Moreover, the number of the heat-transfer pipes needed is twice as much as that of a heat exchanger only for heating or cooling, causing an increase in costs.

The present invention has been made in view of the foregoing problems, and it is an object of the invention to provide an underground heat exchanger including an outer pipe that contains a heat-transfer pipe, in which fluid to be heat-exchanged flows, inserted thereinside and a heat medium sealed thereinside to efficiently exchange heat between the fluid to be heat-exchanged and soil in the ground in both heating operation and cooling operation with a low cost configuration.

### SOLUTION TO THE PROBLEM

To achieve the foregoing object, in an underground heat exchanger (10) of the present invention, a heat-transfer pipe (12) is formed in such a position as to be in an entire length direction of an outer pipe (11) and is arranged such that at least one portion thereof contacts an inner circumferential surface of the outer pipe (11). In addition, fluid to be heat-exchanged is provided to flow inside one heat-transfer pipe (12) in opposite directions in heating operation and cooling operation.

Specifically, a first aspect of the invention is intended to provide the underground heat exchanger (10) including: the outer pipe (11) vertically buried under the ground; the heat-transfer pipe (12), in which fluid to be heat-exchanged flows, inserted inside the outer pipe (11); and a heat medium (13) sealed inside the outer pipe (11). The underground heat exchanger (10) performs heat exchange with soil by using a change in phase of the heat medium (13).

The heat-transfer pipe (12) is formed so as to extend from a top portion of the outer pipe (11) and to be bent at a bottom portion of the outer pipe (11) to return to the top portion, and is arranged such that at least a portion thereof positioned inside the outer pipe (11) contacts an inner circumferential surface of the outer pipe (11), thereby allowing the fluid to be heat-exchanged to flow therein in opposite directions in heating operation and cooling operation.

According to such a configuration, during heating operation and cooling operation, the fluid to be heat-exchanged flows in the heat-transfer pipe (12) inside the outer pipe (11) vertically buried under the ground. The underground heat exchanger (10) functions as an evaporator during heating operation and as a condenser during cooling operation. In the outer pipe (11), the heat-transfer pipe (12) extends from the top portion of the outer pipe (11) and is bent at the bottom portion of outer pipe (11) to return to the top portion, and at least a portion thereof contacts the inner circumferential surface of the outer pipe (11), so that the heat medium (13) can efficiently circulate inside the outer pipe (11) during both heating operation and cooling operation. That is, such a configuration of the heat-transfer pipe (12) allows the heat medium (13) condensed on a surface of the heat-transfer pipe (12) during heating operation to repeat a cycle of reaching the inner circumferential surface of the outer pipe (11) along an outer surface of the heat-transfer pipe (12) and evaporating on the inner circumferential surface of the outer pipe (11) by geothermal heat. On the other hand, the heat medium (13) evaporated on the surface of the heat-transfer pipe (12) during cooling operation repeats a cycle of condensing on the inner circumferential surface of the outer pipe (11) by geothermal heat and moving to the surface of the heat-transfer pipe (12). Accordingly, the heat medium (13) can efficiently circulate inside the outer pipe (11) across an entire longitudinal direction of the outer pipe (11).

Therefore, the above configuration allows the heat medium (13) to efficiently circulate inside the outer pipe (11) with one heat-transfer pipe (12) in heating operation and cooling operation, thereby efficiently exchanging heat of the fluid to be heat-exchanged with soil in the ground in both heating operation and cooling operation at low costs.

Moreover, the above configuration can simplify an internal structure of the underground heat exchanger, so that the underground heat exchanger can be divided in a longitudinal direction into units, or an inside of the underground heat exchanger can be divided into a plurality of spaces. This leads to enhancement of uniform capability, manufacturing cost reduction, and simplification of on-site construction work of the underground heat exchanger.

In the above configuration, the heat-transfer pipe (12) is arranged such that at least one of a first body portion (12d) provided from a top portion to a bottom portion of the outer pipe (11) and a second body portion (12e) provided from the bottom portion to the top portion is formed in a helical shape, and the helical portion contacts an inner circumferential surface of the outer pipe (11) (second aspect of the invention).

Thus, at least one of the first body portion (12d) provided from the top portion to the bottom portion of the outer pipe (11) and the second body portion (12e) provided from the bottom portion to the top portion is formed in a helical shape, thereby having a larger surface area of the heat-transfer pipe (12) inside the outer pipe (11), Hence, heat exchange is efficiently performed between the fluid to be heat-exchanged in the heat-transfer pipe (12) and geothermal heat through the heat medium (13).

Moreover, the inner circumferential surface of the outer pipe (11) is preferably formed to include grooves (11a) extending in a circumferential direction of the outer pipe (11) (third aspect of the invention). This allows the heat medium (13) condensed on the surface of the heat-transfer pipe (12) and moved to the inner circumferential surface during heating operation or the heat medium (13) condensed on the inner circumferential surface of the outer pipe (11) during cooling operation to be held in the grooves (11a) formed on the inner circumferential surface of the outer pipe (11), and to be moved in a circumferential direction, thereby reducing or preventing an occurrence of flowing down of the heat medium (13) to a lower portion of the outer pipe (11). Thus, the heat medium (13) efficiently circulates inside the outer pipe (11), so that heat exchange is more efficiently performed between the fluid to be heat-exchanged in the heat-transfer pipe (12) and soil through the heat medium (13).

In addition, the outer circumferential surface of the heat-transfer pipe (12) is preferably formed to include grooves (12f) extending in a circumferential direction of the heat-transfer pipe (12) (fourth aspect of the invention). This allows the condensed heat medium (13) to be held in the grooves (12f) formed on the outer circumferential surface of the heat-transfer pipe (12) and to be moved in the circumferential direction of the heat-transfer pipe (12), thereby reducing or preventing an occurrence of flowing down of the condensed heat medium (13) at the outer circumferential surface of the heat-transfer pipe (12) with more certainty. Therefore, a combination with the third aspect of the invention reduces or prevents an occurrence of flowing down of the heat medium (13) to a lower portion of the outer pipe (11) with more certainty, and leads to circulation of the heat medium (13) in the outer pipe (11) more efficiently.

Moreover, the outer pipe (11) is preferably buried under the ground such that a longitudinal direction thereof is in a vertical direction, and the grooves (11a, 12f) are preferably formed so as to extend in a horizontal direction (fifth aspect of the invention).

Hence, the heat medium (13) condensed on the inner circumferential surface of the outer pipe (11) or the outer circumferential surface of the heat-transfer pipe (12) is held in the grooves (11a, 12f) extending in a horizontal direction, thereby reducing or preventing an occurrence of vertically flowing down of the heat medium (13) with more certainty.

A sixth aspect of the invention is intended to provide an air conditioning system (1) including the underground heat exchanger (10) of any one of the first through fifth aspects of the invention so as to perform a refrigeration cycle.

Specifically, the air conditioning system (1) of the sixth aspect of the invention includes a refrigerant circuit (2) including: the underground heat exchanger (10) described in any one of the first through fifth aspects of the invention; a utilization side heat exchanger (5); a compression mechanism (3); an expansion mechanism (6); and a flow path switching unit (4) for switching a flow direction of refrigerant serving as fluid to be heat-exchanged. The air conditioning system (1) is configured such that a switch in the flow direction of the refrigerant in the refrigerant circuit (2) by the flow path switching unit (4) can switch between heating operation and cooling operation.

According to such a configuration, the flow direction of the refrigerant serving as the fluid to be heat-exchanged in the refrigerant circuit (2) is switched by the flow path switching unit (4), thereby allowing the underground heat exchanger (10) serving as a heat-source heat exchanger to function as an evaporator or a condenser. In such a configuration, the underground heat exchanger (10) configured as the first through fifth aspects of the invention can obtain effects that are substantially similar to those provided by the first through fifth aspects of the invention. In the air conditioning system (1) having the above configuration, therefore, the underground heat exchanger (10) capable of efficiently performing heat exchange between the refrigerant and soil in the ground can also be obtained at low costs.

### ADVANTAGES OF THE INVENTION

In the underground heat exchanger (10) of the first aspect of the invention, the heat-transfer pipe (12) is formed inside the outer pipe 11 so as to extend from a top portion of the outer pipe (11) and to be bent at a bottom portion of the outer pipe (11) to return to the top portion, and is arranged such that at least a portion thereof contacts an inner circumferential surface of the outer pipe (11). The heat-transfer pipe (12) has fluid to be heat-exchanged flowing thereinside in opposite directions in heating operation and cooling operation. Accordingly, one heat-transfer pipe (12) allows the heat medium (13) to efficiently circulate inside the outer pipe (11) in both heating and cooling operations, and heat exchange is efficiently performed between the fluid to be heat-exchanged and soil in the ground through the heat medium (13). Therefore, heat exchange between the fluid to be heat-exchanged and soil in the ground in both heating operation and cooling operation can be efficiently performed with a low cost configuration.

Such a configuration can allow the underground heat exchanger (10) to be divided in a longitudinal direction into units, or an inside of the underground heat exchanger (10) to be divided into a plurality of spaces, thereby enhancing uniform capability, manufacturing cost reduction, and simplification of on-site construction operation of the underground heat exchanger (10).

According to the second aspect of the invention, the heat-transfer pipe (12) is provided such that at least one of the first body portion (12d) provided from a top portion to a bottom portion of the outer pipe (11) and the second body portion (12e) provided from the bottom portion to the top portion is formed in a helical shape, and the helical portion contacts an inner circumferential surface of the outer pipe (11), thereby having a larger heating surface area of the heat-transfer pipe (12) inside the outer pipe (11). Thus, heat exchange can be efficiently performed between fluid to be heat-exchanged and soil in the ground in both heating operation and cooling operation.

According to the third aspect of the invention, an inner circumferential surface of the outer pipe (11) includes the grooves (11a) extending in a circumferential direction of the outer pipe (11), so that the heat medium (13) is held in the inner circumferential surface of the outer pipe (11) with more certainty. Hence, heat exchange is more efficiently performed between fluid to be heat-exchanged and soil in the ground through the heat medium (13). Particularly, according to the forth aspect of the invention, an outer circumferential surface of the heat-transfer pipe (12) includes the grooves (12f) extending in a circumferential direction of the heat-transfer pipe (12), so that the heat medium (13) is held on the outer circumferential surface of the heat-transfer pipe (12) with more certainty. Hence, heat exchange is more efficiently performed between fluid to be heat-exchanged and soil in the ground through the heat medium (13) by a combination with the configuration of the third aspect of the invention.

According to the fifth aspect of the invention, the outer pipe (11) is buried under the ground such that a longitudinal direction thereof is in a vertical direction, and the grooves (11a, 12f) are formed so as to extend in a horizontal direction, thereby reducing or preventing an occurrence of vertically flowing down of the heat medium (13) condensed inside the outer pipe (11) with more certainty.

The air conditioning system (1) of the sixth aspect of the invention includes the refrigerant circuit (2) including: the underground heat exchanger (10) described in any one of the first through fifth aspects of the invention; the utilization side heat exchanger (5); the compression mechanism (3); the expansion mechanism (6); and the flow path switching unit (4) for switching a flow direction of refrigerant serving as fluid to be heat-exchanged. The air conditioning system (1) is configured such that the flow path switching unit (4) can switch between heating operation and cooling operation. Therefore, the air conditioning system (1) can also obtain effects that are substantially similar to those provided by the first through fifth aspects of the invention.

### BRIEF DESCRIPTION OF DRAWINGS

[FIG. 1] FIG. 1 is a schematic diagram illustrating an air conditioning system including an underground heat exchanger according to an embodiment of the present invention;
[FIG. 2] FIG. 2 is a longitudinal cross-section illustrating a schematic configuration of the underground heat exchanger.
[FIG. 3] FIG 3 is an enlarged partial perspective view illustrating a schematic configuration of an outer pipe and a heat-transfer pipe of the underground heat exchanger.
[FIG. 4] FIG. 4 is an enlarged partial cross-sectional view illustrating a change in phase of carbon dioxide inside the underground heat exchanger during heating operation.
[FIG. 5] FIG. 5 is a diagram, corresponding to FIG. 4, illustrating a change in phase of carbon dioxide inside the underground heat exchanger during cooling operation.

### DESCRIPTION OF EMBODIMENTS

Embodiments of the present invention will be described hereinafter with reference to the drawings. The following description of the preferred embodiments is merely exemplary in nature and is in no way intended to limit the invention, its application, or uses.

An underground heat exchanger according to the embodiments of the present invention is used in an air conditioning system capable of performing heating operation and cooling operation. The underground heat exchanger is configured to function as an evaporator during heating operation to recover heat from soil in the ground, whereas the underground heat exchanger functions as a condenser during cooling operation to dissipate heat into soil in the ground.

### <Overall Configuration of Air Conditioning System>

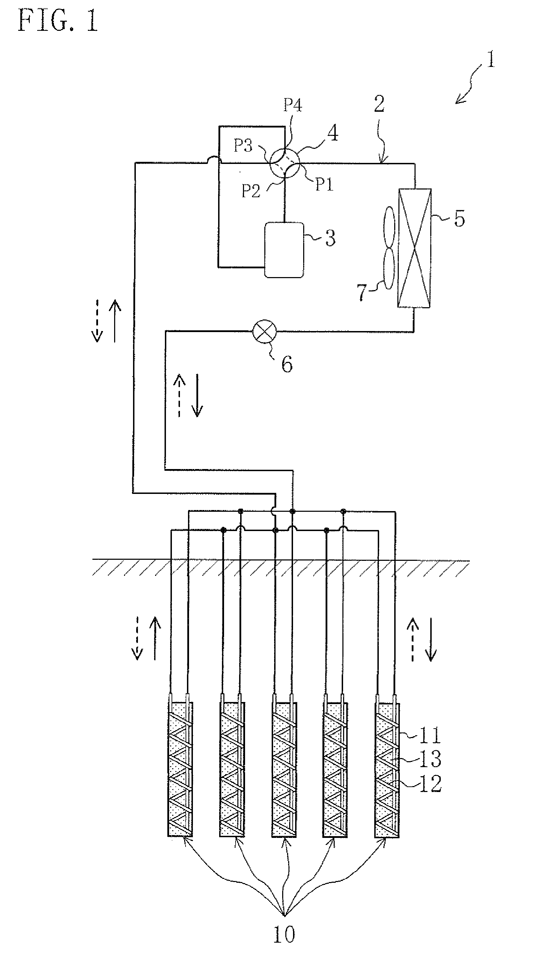

FIG. 1 is a schematic diagram illustrating an air conditioning system (1) including an underground heat exchanger (10) according to an embodiment of the present invention. The air conditioning system (1) includes a refrigerant circuit (2) to which a compressor (3) (compression mechanism), a four-way valve (4) (flow path switching unit), an indoor heat exchanger (5) (utilization side heat exchanger), an expansion valve (6) (expansion mechanism), and a plurality of underground heat exchangers (10) buried under the ground are connected in sequence through a refrigerant pipe. The refrigerant circuit (2) has refrigerant (fluid to be heat-exchanged) sealed therein, and the refrigerant circulates inside the refrigerant circuit (2), so that the indoor heat exchanger (5) becomes a condenser and the underground heat exchanger (10) becomes an evaporator during heating operation, whereas the indoor heat exchanger (5) becomes an evaporator and the underground heat exchanger becomes a condenser during cooling operation, thereby performing a vapor compression refrigeration cycle. In this embodiment, the plurality of underground heat exchangers (10) are connected in parallel to the refrigerant circuit (2), and each of the heat exchangers (10) is configured to perform heat exchange with soil in the ground.

The compressor (3) includes, for example, a scroll compressor, and is configured to suck refrigerant from a suction port to compress and discharge the compressed refrigerant from a discharge port. In the refrigerant circuit (2), the discharge port of the compressor (3) is connected to a second port (P2) of the four-way valve (4), and the suction port of the compressor (3) is connected to a fourth port (P4) of the four-way valve (4).

The four-way valve (4) includes: a first port (P1) connecting to the indoor heat exchanger (5); the second port (P2) connecting to the discharge port of the compressor (3); a third port (P3) connecting to the underground heat exchanger (10); and the fourth port (P4) connecting to the suction port of the compressor (3). The four-way valve (4) can switch between a first state (a state indicated by a solid line in FIG. 1) and a second state (a state indicated by a dashed line in FIG.1). The first state is in which the first port (P1) and the second port (P2) communicate with each other, and the third port (P3) and the fourth port (P4) communicate with each other. The second state is in which the first port (P1) and the fourth port (P4) communicate with each other, and the second port (P2) and the third port (P3) communicate with each other.

The indoor heat exchanger (5) is, for example, a cross-fin type fin-and-tube heat exchanger, and serves as an air heat exchanger for exchanging heat of refrigerant with indoor air. In the air conditioning system (1), the indoor heat exchanger (5) is installed in an indoor unit arranged in a room to be air-conditioned. In the refrigerant circuit (2), one end of the indoor heat exchanger (5) is connected to the expansion valve (6), and another end is connected to the first port (P1) of the four-way valve (4). In the vicinity of the indoor heat exchanger (5), an indoor fan (7) for sending air subjected to heat exchange with the indoor heat exchanger (5) into the room is provided.

The expansion valve (6) includes an electronic expansion valve whose degree of opening is variable. A change in degree of the opening of the expansion valve (6) leads to expansion of refrigerant flowing from the indoor heat exchanger (5) or the underground heat exchanger (10), thereby decompressing the refrigerant to a predetermined pressure level.

The underground heat exchanger (10) has a substantially cylindrical outer shape, and is configured to be buried under the ground so as to extend in a longitudinal direction (vertical direction) such that heat exchange is performed between refrigerant flowing thereinside and soil. The underground heat exchanger (10) includes: an outer pipe (11) having a closed-bottomed tubular shape; a heat-transfer pipe (12), in which the refrigerant flows, installed inside the outer pipe (11); and a heat medium (13) sealed inside the outer pipe (11) each of which will be described in detail later. The underground heat exchanger (10) is configured to perform heat exchange between the refrigerant flowing inside the heat-transfer pipe (12) and the soil outside the outer pipe (11) through the heat medium (13).

In the air conditioning system (1), therefore, heating operation is performed when the four-way valve (4) is in the first state, and cooling operation is performed when the four-way valve (4) is in the second state. That is, in heating operation, the underground heat exchanger (10) functions as an evaporator and the indoor heat exchanger (5) function as a condenser to perform a vapor compression refrigeration cycle in the refrigerant circuit (2). In the cooling operation, on the other hand, the underground heat exchanger (10) functions as a condenser, and the indoor heat exchanger (5) functions as an evaporator to perform a vapor compression refrigeration cycle in the refrigerant circuit (2).

### <configuration of Underground Heat Exchanger>

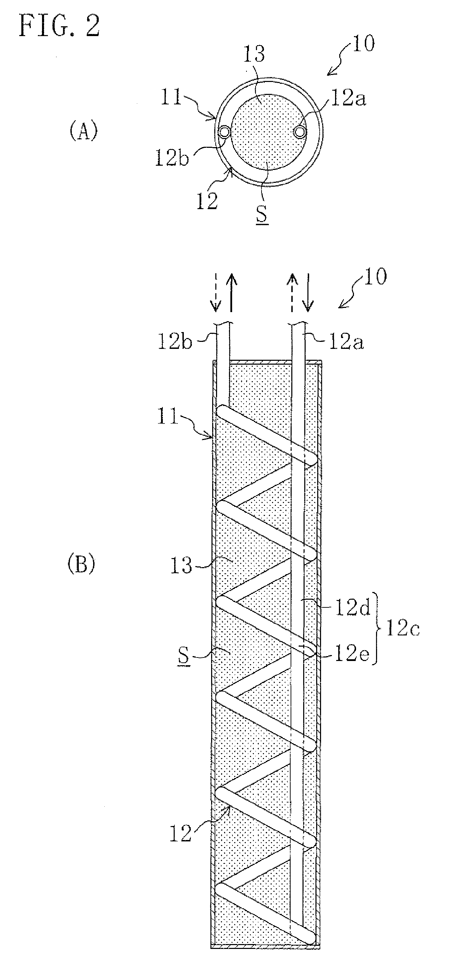

A configuration of the underground heat exchanger (10) will be described below with reference to FIG. 2.

The underground heat exchanger (10) includes the outer pipe (11), the heat-transfer pipe (12) installed inside the outer pipe (11), and the heat medium (13) sealed inside the outer pipe (11) as described above.

The outer pipe (11) is a metal tubular member with both ends closed with respective plate members made of metal, and has space (S) thereinside. The outer pipe (11) has a closed structure capable of sealing a predetermined amount of carbon dioxide (CO₂) serving as the heat medium (13) in the space (S) thereof. In the space (S) of the outer pipe (11), the heat-transfer pipe (12), in which refrigerant flows, is installed. The heat-transfer pipe (12) is connected to a refrigerant pipe of the refrigerant circuit (2) by penetrating through the plate member forming one of the end surfaces (end surface on a ground surface side) of the outer pipe (11). Here, the outer pipe (11) is vertically buried under the ground such that a tubular axial direction thereof is in a substantially vertical direction. Although the outer pipe (11) is ideally buried under the ground in a substantially vertical direction, a certain degree of inclination may be allowed.

The heat-transfer pipe (12) is made of copper and is a pipe member, in which refrigerant flows, forming a portion of a flow path of the refrigerant circuit (2). In this embodiment, the heat-transfer pipe (12) is formed so as to extend from a top portion to a bottom portion of the outer pipe (11) and to be bent at the bottom portion to return to the top portion, and is installed inside the outer pipe (11) such that both ends thereof protrude outward by penetrating through the plate member forming one of the end surfaces of the outer pipe (11). Specifically, the heat-transfer pipe (12) includes: a first connection portion (12a) that has one end side connecting to the expansion valve (6); a body portion, (12c) connecting to the other end side of the first connection portion (12a); and a second connection portion (12b) that has one end side connecting to the body portion (12c) and the other end side connecting to the third port (P3) of the four-way valve (4). These connection portions (12a, 12b) are provided so as to penetrate through the plate member forming one of the end surfaces (end surface on the ground surface side) of the outer pipe (11), whereas the body portion (12c) is arranged along an inner surface of the outer pipe (11).

The body portion (12c) includes: a first body portion (12d), formed in a straight shape, connecting to the other end side of the first connection portion (12a) and extending to the bottom portion of the outer pipe (11); and a second body portion (12e), formed in a helical shape, connecting to the first body portion (12d) and extending to the top portion of the outer pipe (11). Such helical formation of the second body portion (12e) can increase a surface area in which heat is exchanged between refrigerant flowing inside the second body portion (12e) and the carbon dioxide (13) sealed inside the outer pipe (11). Accordingly, heat exchange is efficiently performed between the refrigerant and the carbon dioxide (13).

The helical second body portion (12e) is arranged so as to contact an inner circumferential surface of the outer pipe (11), and the first body portion (12d) is arranged on an inward side of the helical second body portion (12e) so as to contact the second body portion (12e). Accordingly, the second body portion (12e) contacts the inner circumferential surface of the outer pipe (11), so that the carbon dioxide (13) condensed on an outer circumferential surface of the second body portion (12e) or the inner circumferential surface of the outer pipe (11) is moved to the inner circumferential surface of the outer pipe (11) or the outer circumferential surface of the second body portion (12e), thereby leading to evaporation of the carbon dioxide (13) on each of such surfaces, as will be described later.

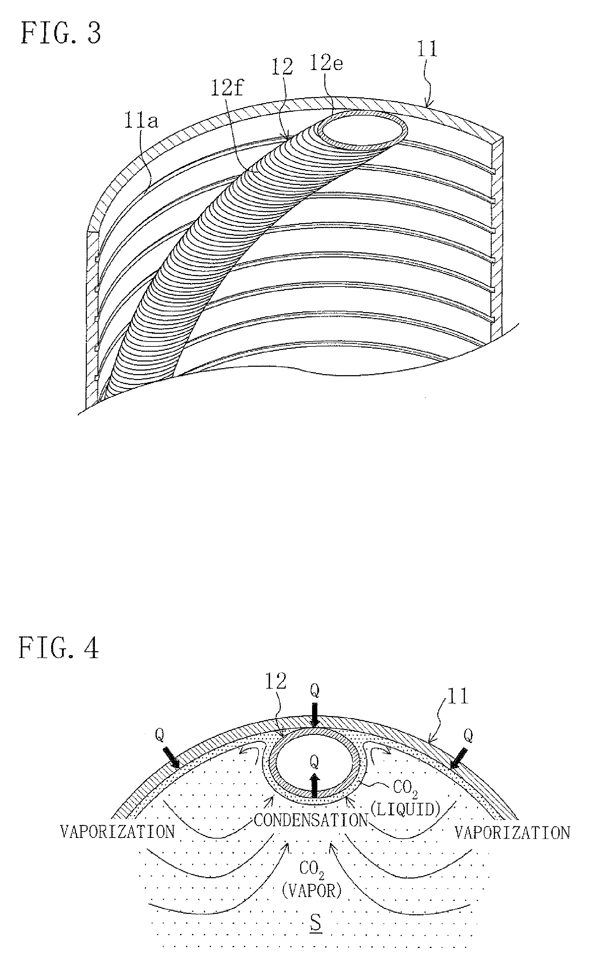

That is, as illustrated in FIG. 4, during heating operation of the air conditioning system (1), low-pressure refrigerant that has a saturation temperature lower than a temperature of soil in the ground flows inside the heat-transfer pipe (12) of the underground heat exchanger (10). Consequently, the carbon dioxide (13), inside the outer pipe (11), that has a saturation temperature lower than a temperature of the soil and higher than a temperature of the low-pressure refrigerant is condensed on an outer surface of the heat-transfer pipe (12). Herein, the refrigerant flowing inside the second body portion (12e) of the heat-transfer pipe (12) is evaporated by heat of condensation of the carbon dioxide (13), and is sucked through the suction port of the condenser (3).

As described above, since the second body portion (12e) and the inner circumferential surface of the outer pipe (11) contact each other, the condensed carbon oxide (13) moves from the outer circumferential surface of the second body portion (12e) to the inner circumferential surface of the outer pipe (11) and is evaporated on the inner circumferential surface by heat of the soil in the ground. The evaporated carbon dioxide (13) is condensed again when cooled by the second body portion (12e) of the heat-transfer pipe (12).

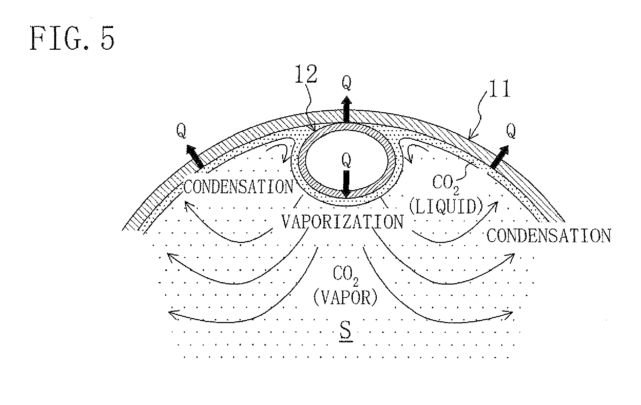

On the other hand, as illustrated in FIG. 5, during cooling operation of the air conditioning system (1), high-pressure refrigerant that has a saturation temperature higher than a temperature of soil in the ground flows inside the heat-transfer pipe (12) of the underground heat exchanger (10). The carbon dioxide (13), inside the outer pipe (11), has a saturation temperature higher than a temperature of the soil and lower than a temperature of the high-pressure refrigerant, thereby vaporizing on the outer surface of the heat-transfer pipe (12) while condensing on the inner circumferential surface of the outer pipe (11).

That is, as described above, since the second body portion (12e) and the inner circumferential surface of the outer pipe (11) contact each other, the carbon dioxide (13) condensed on the inner circumferential surface of the outer pipe (11) moves to the outer circumferential surface of the second body portion (12e) and is vaporized on the outer circumferential surface by heat of the refrigerant. The vaporized carbon dioxide (13) is condensed again when cooled by the inner circumferential surface of the outer pipe (11). When the carbon dioxide (13) vaporizes on the outer surface of the second body portion (12e) of the heat-transfer pipe (12), heat of the refrigerant flowing inside the second body portion (12e) is absorbed by evaporation of the carbon dioxide (13), so that the refrigerant is condensed and flows into the expansion valve (6).

In this embodiment, as illustrated in FIG. 3, the inner circumferential surface of the outer pipe (11) has a plurality of grooves (11a) that are formed alongside one another in a longitudinal direction and extend horizontally in a circumferential direction of the outer pipe (11). Moreover, the outer circumferential surface of the second body portion (12e) of the heat-transfer pipe (12) has a plurality of grooves (12f) that are formed in a longitudinal direction of the heat-transfer pipe (12). The grooves (12f) are parallel to the grooves (11a) on the inner circumferential surface of the outer pipe (11) and extend horizontally in a circumferential direction of the heat-transfer pipe (12).

Accordingly, the inner circumferential surface of the outer pipe (11) and the outer circumferential surface of the second body portion (12e) of the heat-transfer pipe (12) have the respective grooves (11a, 12f) formed thereon, so that the carbon dioxide (13) condensed on the outer circumferential surface of the second body portion (12e) during heating operation and the carbon dioxide (13) condensed on the inner circumferential surface of the outer pipe (11) during cooling operation are held inside the respective grooves (11a, 12f), thereby reducing or preventing an occurrence of flowing down of the carbon dioxide (13) to a lower portion of the outer pipe (11). As described above, since the grooves (11a, 12f) are respectively arranged on the inner circumferential surface of the outer pipe (11) and the outer circumferential of the second body portion (12e) of the heat-transfer pipe (12) in the circumferential direction and extend horizontally, the condensed carbon dioxide (13) can spread in the circumferential direction (horizontal direction) on the outer circumferential surface of the second body portion (12e) of the heat-transfer pipe (12) or the inner circumferential surface of the outer pipe (11) (see FIGs. 4 and 5). Consequently, heat exchange of the carbon dioxide (13) is performed with the refrigerant and soil. Thus, such an arrangement of the grooves (11a, 12f) can reduce or prevent an occurrence of vertically flowing down of the condensed carbon dioxide (13) in the outer pipe (11) with more certainty, and heat exchange is effectively performed between the refrigerant inside the heat-transfer pipe (12) and the soil outside the outer pipe (11) through the carbon dioxide (13).

In this embodiment, the grooves (11a) on the inner circumferential surface of the outer pipe (11) and the grooves (12f) on the outer circumferential surface of the heat-transfer pipe (12) are formed in substantially parallel, but not limited thereto. The grooves (11a, 12f) may cross each other, or the grooves (11a, 12f) may be slightly inclined up and down relative to a horizontal direction.

### -Operation-

Next, operation of the air conditioning system (1) having the above configurations will be described with reference to FIGs. 1, 4 and 5.

### (Heating Operation)

As illustrated in FIG. 1, the four-way valve (4) is switched to a first state at the beginning of heating operation. Subsequently, when the compressor (3) comes into operation, compressed high-pressure refrigerant (gas refrigerant) is discharged from a discharge port of the compressor (3) and flows into the indoor heat exchanger (5) through the four-way valve (4). In the indoor heat exchanger (5), the high-pressure refrigerant dissipates heat to indoor air and is condensed. The indoor air is heated by heat of condensation, and indoor heating is performed. The refrigerant condensed in the indoor heat exchanger (5) flows out of the indoor heat exchanger (5), is then decompressed by the expansion valve (6), and flows into the underground heat exchanger (10) (a solid line arrow in FIG. 1). In the expansion valve (6), the refrigerant is decompressed such that a saturation temperature thereof is lower than a temperature of soil in the ground.

The low-pressure refrigerant flowing into the underground heat exchanger (10) absorbs heat of the ground through the carbon dioxide (13) in the outer pipe (11) and is evaporated. The evaporated refrigerant flows out of the underground heat exchanger (10), and is sucked again into the compressor (3) through the four-way valve (4). Then, the refrigerant is compressed to a predetermined pressure level and is discharged.

Accordingly, the refrigerant circulates inside the refrigerant circuit (2) to perform a vapor compression refrigeration cycle, and indoor heating is performed.

Next, a change in the state of the refrigerant and the carbon dioxide (13) in the underground heat exchanger (10) will be described.

As described above, when the low-pressure refrigerant having a saturation temperature lower than a temperature of the soil in the ground flows into the body portion (12c) of the heat-transfer pipe (12) in the underground heat exchanger (10), the carbon dioxide (13) being sealed inside the outer pipe (11) of the underground heat exchanger (10) and having a saturation temperature higher than a temperature of the refrigerant is condensed on the body portion (12c) of the heat-transfer pipe (12) as illustrated in FIG. 4. Then, the refrigerant inside the heat-transfer pipe (12) is evaporated by heat of condensation of the carbon dioxide (13), and is sucked into the compressor (3) after flowing out of the underground heat exchanger (10).

On the other hand, in the outer pipe (11) of the underground heat exchanger (10), the condensed carbon dioxide (13) moves horizontally along the outer circumferential surface of the helical second body portion (12e) of the heat-transfer pipe (12) to the inner circumferential surface of the outer pipe (11), the inner circumferential surface being in contact with the second body portion (12e). On the outer circumferential surface of the outer pipe (11), the carbon dioxide (13) is vaporized by heat of the soil in the ground, and the vaporized carbon dioxide (13) is condensed again by the refrigerant flowing in the second portion (12e) of the heat-transfer pipe (12).

### (Cooling Operation)

First, the four-way valve (4) is switched to a second state at the beginning of cooling operation. Subsequently, when the compressor (3) starts operation, compressed high-pressure refrigerant is discharged from a discharge port of the compressor (3), and flows into the underground heat exchanger (10) through the four-way valve (4) (a dashed line arrow in FIG. 1). The high-pressure refrigerant flowing into the underground heat exchanger (10) dissipates heat to soil in the ground through the carbon dioxide (13) inside the outer pipe (11), and condenses. The condensed refrigerant flows out of the underground heat exchanger (10), is then decompressed by the expansion valve (6), and is injected into the indoor heat exchanger (5). In the expansion valve (6), the refrigerant is decompressed such that a saturation temperature thereof is lower than an indoor temperature.

The low-pressure refrigerant flowing into the indoor heat exchanger (5) absorbs heat of indoor air, and is evaporated. The evaporated refrigerant flows out of the indoor heat exchanger (5), and is sucked again into the compressor (3) through the four-way valve (4). Then, the refrigerant is compressed to a predetermined pressure level and is discharged.

In this manner, the refrigerant circulates inside the refrigerant circuit (2) to perform a vapor compression refrigeration cycle, and indoor cooling is performed.

Next, a change in the state of the refrigerant and the carbon dioxide (13) in the underground heat exchanger (10) will be described.

As illustrated in FIG. 5, during the cooling operation described above, the carbon dioxide (13), being sealed inside the outer pipe (11) of the underground heat exchanger (10) and having a saturation temperature lower than a temperature of the refrigerant and a saturation temperature higher than a temperature of soil in the ground, is condensed on the inner circumferential surface of the outer pipe (11) by geothermal heat. The condensed carbon dioxide (13) moves horizontally along the inner circumferential surface of the outer pipe (11) to the outer circumferential surface of the second body portion (12e) of the heat-transfer pipe (12), the outer circumferential surface being in contact with the inner circumferential of the outer pipe (11). Since the high-pressure refrigerant having a temperature higher than a saturation temperature of the carbon dioxide (13) flows inside the heat-transfer pipe (12), the carbon dioxide (13) vaporizes on the outer circumferential surface of the second body portion (12e) of the heat-transfer pipe (12). Herein, the heat of the refrigerant in the heat-transfer pipe (12) is absorbed by the carbon dioxide (13), so that the refrigerant is condensed and flows into the expansion valve (6) from the underground heat exchanger (10).

On the other hand, the carbon dioxide (13) evaporated on the outer circumferential surface of the second body portion (12e) of the heat-transfer pipe (12) is condensed again on the inner circumferential surface of the outer pipe (11).

### -Advantages of Embodiment-

According to the embodiment, the underground heat exchanger (10) includes the outer pipe (11) vertically buried under the ground, and the outer pipe (11) includes the heat-transfer pipe (12), in which fluid to be heat-exchanged flows, inserted thereinside and the carbon dioxide (13) serving as a heat medium sealed thereinside. In the underground heat exchanger (10), the second body portion (12e) of the heat-transfer pipe (12) extending from a top portion to a bottom portion of the outer pipe (11) is formed in a helical shape, and the heat-transfer pipe (12) is arranged such that the second body portion (12e) contacts an inner circumferential surface of the outer pipe (11), so that a phase of the carbon dioxide (13) is efficiently changed between the second body portion (12e) and the inner circumferential surface of the outer pipe (11) during both heating operation and cooling operation. Consequently, heat exchange is performed between refrigerant and soil in the ground through the carbon dioxide (13). Thus, a switch in a flow direction of the refrigerant inside one heat-transfer pipe (12) leads to heat exchange between the refrigerant and soil in the ground during both heating operation and cooling operation. Hence, the underground heat exchanger (10) having good heat exchange efficiency is obtained with a low cost configuration.

Moreover, the inner circumferential surface of the outer pipe (11) and the outer circumferential surface of the second body portion (12e) of the heat-transfer pipe (I2) have a plurality of respective grooves (11a, 12f) each of which is formed in a circumferential direction and extends horizontally. The grooves (11 a) of the outer pipe (11) reduce or prevent an occurrence of vertically flowing down of the carbon dioxide (13) condensed on the outer circumferential surface of the second body portion (12e) of the heat-transfer pipe (12) during heating operation, and the grooves (12f) of the heat-transfer pipe (12) reduce or prevent an occurrence of flowing down of the carbon dioxide (13) condensed on the inner circumferential surface of the outer pipe (11) during cooling operation. That is, the condensed carbon dioxide (13) moves inside the grooves (11a, 12f) in the circumferential direction (horizontal direction), so that the carbon dioxide (13) is vaporized in a wider area of the circumferential direction, thereby efficiently exchanging heat between refrigerant and soil in the ground through the carbon dioxide (13).

In addition, the above configuration can simplify an internal structure of the underground heat exchanger (10) and obtain heat exchange capability that is substantially the same in any position in a longitudinal direction of the underground heat exchanger (10). Accordingly, the underground heat exchanger (10) may be divided in a longitudinal direction into units, or an inside of the underground heat exchanger (10) may be divided into a plurality of spaces. Such a configuration can enhance uniform capability, manufacturing cost reduction, and simplification of on-site construction operation of the underground heat exchanger (14).

### <<Other Embodiments>>

The foregoing embodiment may be configured as follows.

In the foregoing embodiment, only the second body portion (12e) of the heat-transfer pipe (12) is formed in a helical shape and has the grooves (12f) on the outer surface thereof, but not limited thereto. The first body portion (12d) may be formed in a helical shape and have grooves on an outer circumferential surface thereof. In such a case, the helical first body portion (12d) is also arranged so as to contact an inner circumferential surface of the outer pipe (11). Moreover, a portion of each of the first body portion (12d) and the second body portion (12e) may be formed in a helix shape. In addition, a non-helical portion of the heat-transfer pipe (12) may contact the inner circumferential surface of the outer pipe (11), and grooves may be formed on the outer circumferential surface of the heat-transfer pipe (12), the outer circumferential surface being in contact with the inner circumferential surface of the outer pipe (11). Moreover, the inner circumferential surface of the outer pipe (11) or the outer circumferential surface of the heat-transfer pipe (12) may be configured not to have grooves.

In the foregoing embodiment, the second body portion (12e) of the heat-transfer pipe (12) is formed in a helical shape, but not limited thereto. The second body portion (12e) may be formed in any shape as long as heat exchange efficiency is not affected by a pressure loss between an inlet side and an outlet side of the heat-transfer pipe (12).

In the foregoing embodiment, moreover, the carbon dioxide (13) is used as a heat medium inside the outer pipe (11), but not limited thereto. Any medium which undergoes a phase change between -10°C and 40°C may be used.

Moreover, in the foregoing embodiment, the underground heat exchanger (10) is configured to have one heat-transfer pipe (12) which is installed inside one outer pipe (11), but not limited thereto. The underground heat exchanger (10) may be configured to have a combination of the outer pipe that is divided in a longitudinal direction thereof and the heat-transfer pipe that is divided with division of the outer pipe. In the foregoing embodiment, a plurality of the underground heat exchangers (10) are connected in parallel, but not limited thereto. A portion or all of the plural underground heat exchangers (10) may be connected in series.

In the foregoing embodiment, the heat-transfer pipe (12) inserted inside the outer pipe (11) is made of copper, but not limited thereto. The heat-transfer pipe (12) may be made of any material having good heat conductivity or corrosion resistance such as aluminum, aluminum alloy, iron, or a composite material.

In the foregoing embodiment, the four-way valve (4) is configured to switch a flow direction of the refrigerant in the refrigerant circuit (2) in the air conditioning system (1), but not limited thereto. Any configuration may be employed as long as the flow direction of the refrigerant is switchable.

### INDUSTRIAL APPLICABILITY

The present invention is useful particularly for an underground heat exchanger for exchanging heat between refrigerant and soil in the ground.

### DESCRIPTION OF REFERENCE CHARACTERS

- 1: air conditioning system
- 2: refrigerant circuit
- 3: compressor (compression mechanism)
- 4: four-way valve (flow path switching unit)
- 5: indoor heat exchanger (utilization side heat exchanger)
- 6: expansion valve (expansion mechanism)
- 7: indoor fan
- 10: underground heat exchanger
- 11: outer pipe
- 11a: grooves
- 12: heat-transfer pipe
- 12a: first connection portion
- 12b: second connection portion
- 12c: body portion
- 12d: first body portion
- 12e: second body portion
- 12f: grooves
- 13: carbon dioxide (heat medium)
- S: space

## Claims

1. An underground heat exchanger comprising:
an outer pipe (11) vertically buried under the ground;
a heat-transfer pipe (12), in which fluid to be heat-exchanged flows, inserted inside the outer pipe (11); and
a heat medium (13) sealed inside the outer pipe (11),
wherein a change in phase of the heat medium (13) is used to perform heat exchange with soil, and
the heat-transfer pipe (12) is formed so as to extend from a top portion of the outer pipe (11) and to be bent at a bottom portion of the outer pipe (11) to return to the top portion, and is arranged such that at least a portion thereof positioned inside the outer pipe (11) contacts an inner circumferential surface of the outer pipe (11) to allow the fluid to be heat-exchanged to flow thereinside in opposite directions in heating operation and cooling operation.

2. The underground heat exchanger of claim. 1, wherein the heat-transfer pipe (12) is formed such that at least one of a first body portion (12d) provided from the top portion to the bottom portion of the outer pipe (11) and a second body portion (12e) provided from the bottom portion to the top portion of the outer pipe (11) is in a helical shape, and the helical portion is arranged to contact the inner circumferential surface of the outer pipe (11).

3. The underground heat exchanger of claim 1, wherein the inner circumferential surface of the outer pipe (11) includes grooves (11a) extending in a circumferential direction of the outer pipe (11).

4. The underground heat exchanger of clam 3, wherein an outer circumferential surface of the heat-transfer pipe (12) includes grooves (12f) extending in a circumferential direction of the heat-transfer pipe (12).

5. The underground heat exchanger of claim 3,
wherein the outer pipe (11) is buried under the ground such that a longitudinal direction thereof is in a vertical direction, and
the grooves (11a, 12f) are formed so as to extend in a horizontal direction.

6. An air conditioning system, comprising:
a refrigerant circuit (2) including
the underground heat exchanger (10) of claim 1;
a utilization side heat exchanger (5);
a compression mechanism (3);
an expansion mechanism (6); and
a flow path switching unit (4) for switching a flow direction of refrigerant serving as the fluid to be heat-exchanged,
wherein a switch in the flow direction of the refrigerant inside the refrigerant circuit (2) by the flow path switching unit (4) can switch between heating operation and cooling operation.
